## Europäisches Patentamt
## European Patent Office
## Office européen des brevets

(19)

(11) Numéro de publication: **0 100 707**
**B1**

(12)

# FASCICULE DE BREVET EUROPEEN

(45) Date de publication du fascicule du brevet:
09.04.86

(51) Int. Cl.⁴: **H 01 S 3/03**

(21) Numéro de dépôt: 83401410.2

(22) Date de dépôt: 07.07.83

(54) Générateur laser guide d'onde à gaz.

(30) Priorité: 09.07.82 FR 8212147

(43) Date de publication de la demande:
15.02.84 Bulletin 84/7

(45) Mention de la délivrance du brevet:
09.04.86 Bulletin 86/15

(84) Etats contractants désignés:
DE FR GB IT NL SE

(56) Documents cités:
DE - A - 3 043 574
GB - A - 2 071 904

JOURNAL OF PHYSICS D APPLIED PHYSICS, vol. 10, no. 1, janvier 1977, pages 1-6, G.B., D.R: HALL et al.: "A compact sealed waveguide CO2 laser"

(73) Titulaire: **SOCIETE ANONYME DE TELECOMMUNICATIONS, 40 avenue de New York, F-75116 Paris (FR)**

(72) Inventeur: **Ouhayoun, Michel, S.A.T. 41, rue Cantagrel, F-75624 Paris Cédex 13 (FR)**
Inventeur: **Robert, Alain, S.A.T. 41, rue Cantagrel, F-75624 Paris Cédex 13 (FR)**

(74) Mandataire: **Bloch, Robert et al, 39 avenue de Friedland, F-75008 Paris (FR)**

## Description

La présente invention concerne un générateur laser guide d'onde à gaz, comprenant une cavité résonante avec un capillaire guide d'onde, remplie du gaz laser, et des moyens d'excitation, ou de pompage, électrique à haute fréquence, pour provoquer une décharge dans le gaz du capillaire.

Les applications d'un tel générateur sont multiples et peuvent être, par exemple, aussi bien médicales qui militaires.

Les lasers capillaire guide d'onde présentent déjà l'avantage d'un rendement volumétrique bien supérieur à celui des lasers classiques.

Quant au procédé d'excitation à haute fréquence, par exemple dans une plage de fréquences comprises entre 30 MHz et 3 GHz, de préférence à 100 MHz, et qui consiste à créer un champ électrique alternatif pour induire une décharge dans le gaz, il présente en soi aussi certains avantages.

La tension d'excitation est basse, par exemple 100 V, et les précautions d'isolement ne sont plus nécessaires.

La source d'alimentation, ou de pompage, peut être miniaturisée.

La durée de vie est considérablement accrue du fait de l'absence d'anode et de cathode pour l'obtention de la décharge et donc de chute de potential cathodique où le gaz laser est dissocié.

La cavité de résonance sert également de guide d'onde p'our lénergie engendrée.

Il faut noter ici que l'excitation transverse, c'est-à-dire la création d'un champ électrique alternatif perpendiculaire à l'axe longitudinal du capillaire est préférée à l'excitation longitudinale.

On connaît déjà un génératuer laser guide d'onde formé de deux barres métalliques, ou blocs, séparées par deux autres barres diélectriques, ou blocs, ou l'inverse, ménageant, entre elles quatre, après assemblage, une chambre, ou guide, de section droite rectangulaire, les deux barres métalliques servant d'électrodes.

Un film isolant peut avantageusement être plaqué sur la paroi intérieure de chacune des barres métalliques pour en éviter l'oxydation par le gaz laser, le champ d'excitation traversant ce film.

On connaît encore un générateur laser guide d'onde, à section droite rectangulaire, formé d'un profilé à section droite en forme de U fermé par un couvercle, le profilé et le couvercle étant en alumine, et les électrodes, de minces couches métalliques, étant plaquées sur les parois du couvercle et du profilé.

Si ces deux types de laser guide d'onde offrent les avantages énoncés ci-dessous, ils présentent néanmoins certains inconvénients.

Ils sont essentiellement limités à une section droite de guide de forme carrée.

Du fait de cette géométrie, il y existe plusieurs modes transversaux possibles se traduisant par des aspects différents de la répartition énergétique dans la section droite du faisceau laser, c'est-à-dire par des taches.

En outre, la structure même de ces lasers, qu'il s'agisse du premier, réalisé en technologie sandwich, ou du deuxième, en technologie couvercle, conduit à des systèmes dits assemblés, à quatre ou deux blocs, qui présentent les inconvénients de l'assemblage.

Sur le plan optique, ils engendrent des déformations et donc aussi des pertes optiques.

Sur le plan industriel de la réalisation, ils nécessitent un ajustage, un soudage ou un collage qui ne peuvent jamais être parfaits.

On connaît par ailleurs d'après la demande de brevet britannique 2 071 904, un générateur laser guide d'onde à gaz à capillaire, comprenant un barreau monolithique en matériau diélectrique, dans lequel est formé un capillaire traversant, une cavité résonante comportant le capillaire, remplie du gaz laser, et des moyens de pompage électrique à haute fréquence pour provoquer une décharge laser dans le gaz du capillaire.

Grâce au caractère monolithique du guide d'onde, on élimine tous les inconvénients attachés aux tubes à gaz connus réalisés par assemblage.

Toutefois, ce dernier générateur comporte des électrodes plongeant dans le capillaire, de sorte qu'elles sont oxydées par le gaz laser qui se décompose, ce qui réduit la durée de vie du laser. Ce phénomène est d'ailleurs également provoqué par le bombardement électronique (sputtering) de ces électrodes, lors de la décharge.

La présente invention vis à éliminer ces derniers inconvénients.

A cet effet la présente invention concerne un générateur laser guide d'onde à gaz à capillaire, comprenant un barreau monolithique en matériau diélectrique, dans lequel est formé un capillaire traversant, une cavité résonante comportant le capillaire, remplie du gaz laser, et des moyens de pompage électrique à haute fréquence pour provoquer une décharge laser dans le gaz .du capillaire, caractérisé par le fait que le barreau comporte une portion intermédiaire amincie effleurant le capillaire, et des électrodes s'étendent sur la portion amincie du barreau pratiquement sur toute sa longueur et de part et d'autre du capillaire.

Dans une forme de réalisation préférée du générateur de l'invention, les moyens de pompage excitent le gaz laser à fréquence radio.

Dans ce cas, l'impédance du plasma est positive et par conséquent le plasma est bien uniforme.

La présente invention sera mieux comprise à l'aide de la description suivante d'une forme de réalisation préférée du générateur de l'invention et du procédé de fabrication de son guide d'onde, en référence aux dessins annexés, sur lesquels:

La figure 1 est une vue en coupe axiale du générateur de l'invention.

La figure 2 est une vue en coupe de guide d'onde selon la ligne II—II de la figure 1.

La figure 3 est une vue en plan d'un côté du guide d'onde du générateur de la figure 1, et

La figure 4 est une vue en plan de l'autre côté du guide d'onde du générateur de la figure 1.

Le générateur laser guide d'onde à gaz représenté sur les dessins comporte un barreau monolithique 1, en matériau diélectrique, par exemple en BeO, Al$_2$O$_3$, ou tout autre matériau analogue, comportant un conduit capillaire traversant 2, et une enveloppe extérieure 3, fermée à ses deux extrémités par deux miroirs 4 et 5 et formant une cavité résonante 6, à l'intérieur de laquelle est disposé le barreau 1 et contenant un gaz actif.

Le barreau monolithique 1 présente une forme générale externe cylindrique d'axe 9. Il comporte deux portions d'extrémité cylindriques 7 et 8 et une portion intermédiaire 12 amincie délimitée par deux plans parallèles 10 et 11 équidistants de l'axe 9 du barreau et se raccordant aux deux portions d'extrémité 7 et 8. A titre indicatif seulement, il faut noter qu'il a été réalisé un barreau de 230 mm de longueur, de diamètre hors-tout de 20 mm, d'épaisseur, dans sa partie médiane, d'environ 3,5 mm, et pourvu de portions d'extrémité 7, 8 de longueur axiale de 3 mm.

Le capillaire 2, dans la forme de réalisation représentée, a une section circulaire d'axe 9. Des capillaires de 2 et 2,5 mm de diamètre ont été réalisés. Le capillaire 2 s'étend d'une extrémité à l'autre du barreau 1, pour déboucher, à ses deux extrémités, dans la cavité 6.

Le barreau 1 est maintenu dans l'enveloppe 3 par deux bagues annulaires 13 et 14 en appui contre le paroi interne de l'enveloppe 3 et dans lesquelles sont disposées respectivement les portions d'extrémité 7 et 8 du barreau 1, servant ainsi au maintien et au centrage du barreau.

Les bagues 13, 14 sont percées d'orifices 15 pour la circulation du gaz laser de l'extérieur vers l'intérieur du barreau, et inversement.

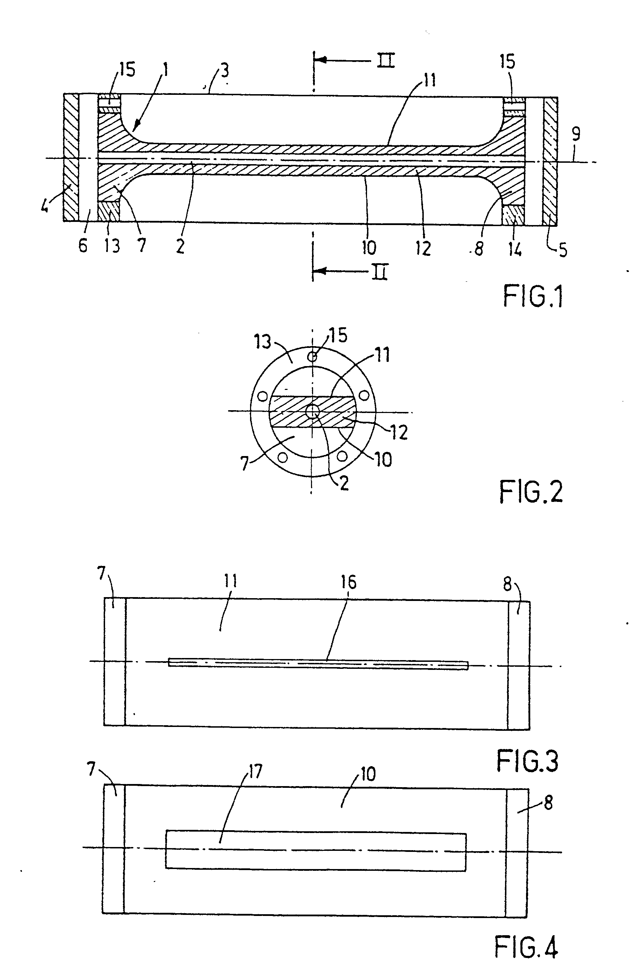

On a représenté sur la figure 1 deux miroirs plans, mais l'invention n'exclut pas l'utilisation d'autres miroirs, par exemple sphériques. L'un des deux miroirs est une lame semi-transparente de sortie du faisceau laser.

Le milieu gazeux utilisé, à une pression de l'ordre de 106 à 133 mbar (80 à 100 Torr), est constitué, dans l'exemple considéré, par un mélange de gaz carbonique, d'azote et d'hélium, qui, par excitation, produit une émission dans l'infrarouge, d'environ 10,6 μm de longueur d'onde.

L'invention n'exclut toutefois pas d'autres milieux gazeux, comme par exemple un mélange contenant de l'oxyde de carbone, dont l'excitation produit une émission, toujours dans l'infrarouge, d'environ 5 μm de longueur d'onde.

Le générateur laser guide d'onde considéré utilise le pompage électrique et comporte donc une source d'alimentation non représentée, et deux électrodes disposées pour provoquer une décharge électrique dans le capillaire à gaz.

Le laser est pompé à haute fréquence, et plus particulièrement à radio fréquence (RF), pompage dont les avantages ont été soulignés plus haut.

De façon préférée, on procéde par excitation transverse, par création d'un champ électrique alternatif transversal de valeur importante, c'est-à-dire perpendiculaire à l'axe 9. Il faut souligner qu'on pourrait également procéder par excitation RF longitudinale, selon l'axe 9, mais que dans ce cas une certaine excitation transverse serait également induite.

Les électrodes, reliées respectivement aux deux bornes de la source d'alimentation alternative, sont disposées sur les deux faces planes 10 et 11 de la portion intermédiaire 12 du barreau 1.

La première électrode 16 est filiforme, s'étend sensiblement sur toute la longueur de la portion 12 et est par exemple portée au potentiel d'excitation à fréquence radio. Quant à l'autre électrode de référence 17, donc portée à la masse, elle s'étend aussi sur pratiquement toute la longueur de la portion 12, mais sur une largeur beaucoup plus importante, lui permettant de jouer un rôle de radiateur.

L'invention telle que décrite jusqu'ici présente des avantages notables, outre ceux des lasers guides d'onde à gaz à excitation, à fréquence radio connus.

Le tube à gaz a une structure monolithique et élimine tous les inconvénients des tubes classiques à structure assemblée.

Le rétrécissement central du barreau dans lequel est formé le capillaire guide d'onde augmente le volume de l'enceinte contenant le gaz laser et dans laquelle il peut circuler. Le renouvellement du gaz à l'intérieur du capillaire est donc plus satisfaisant.

Les électrodes, au demeurant très simples, couvrent efficacement la région du capillaire à exciter et permettent d'obtenir un plasma laser uniforme.

Le guide d'onde possède une section droite circulaire, ce qui est une solution optimale du point de vue optique, pour engendrer une émission laser selon un mode à répartition énergétique gaussienne centrée sur l'axe 9.

Cette forme de capillaire peut en fait être obtenue grâce notamment au procédé de fabrication qui va maintenant être décrit.

On par d'un barreau cylindrique de même diamètre que les portions de centrage 7, 8 précédemment décrites. En effet, il n'est pas possible de former un capillaire dans un barreau de structure trop fine.

On forme tout d'abord un alésage axial traversant dans le barreau pour ménager le capillaire 2, par perçage avec un foret. On notera ici que le coût de réalisation d'un tel capillaire est particulièrement bas. Bien entendu, le capillaire pourrait ne pas être axial.

On usine ensuite le barreau pour l'amincir dans sa partie centrale selon deux plans 10 et 11, jusqu'à pratiquement effleurer le capillaire 2, et réserver deux portions cylindriques de maintien et de centrage 7, 8 aux deux extrémités. Il a été exécuté une forme de réalisation dans laquelle l'épaisseur de la paroi du barreau 1, dans sa portion intermédiaire 12, ne dépassait pratiquement pas 0,6 mm. Bien entendu, l'amincissement du barreau pourrait aussi se faire selon d'autres surfaces que des surfaces planes.

Il reste ensuite à déposer, de manière connue, les deux électrodes 16 et 17 sur les plans 10 et 11 de la région usinée.

On remarquera que c'est par simplicité qu'on a considéré un barreau cylindrique. Mais on aurait pu en prendre un de forme différente.

On peut également mettre en oeuvre un procédé de fabrication par filage, avec un outil de forme complémentaire du capillaire, qui présente en outre l'avantage de pourvoir indifféremment réaliser des capillaires de section droite quelconque, par exemple circulaire, carrée ou rectangulaire, alors qu'avec un procédé par assemblage, les capillaires cylindriques sont pratiquement impossible à obtenir.

Avec un capillaire à section rectangulaire, on peut avantageusement mettre en oeuvre le technologie dite repliée, ou multipassage, permettant à l'aide de miroirs supplémentaires non transparents disposés entre le guide d'onde et les miroirs d'extrémité de la cavité résonante, d'obtenir dans la largeur plusieurs trajets du faisceau laser à l'intérieur même du guide d'onde. Par exemple, deux miroirs supplémentaires disposés respectivement prés des deux extrémités du guide permettant trois passages.

**Revendications**

1. Générateur laser guide d'onde à gaz à capillaire, comprenant un barreau monolithique (1) en matériau diélectrique, dans lequel est formé un capillaire traversant (2), une cavité résonante (6) comportant le capillaire (2), remplie du gaz laser, et des moyens de pompage électrique à haute fréquence pour provoquer une décharge laser dans le gaz du capillaire, caractérisé par le fait que le barreau (1) comporte une portion intermédiaire amincie (12) effleurant le capillaire (2), et des électrodes (16, 17) s'étendent sur la portion amincie (12) du barreau (1) pratiquement sur toute sa longueur et de part et d'autre du capillaire (2).

2. Générateur selon la revendication 1, dans lequel l'une (16) des électrodes est filiforme et l'autre (17) a la forme d'une bande.

3. Générateur selon l'une des revendications 1 et 2, dans lequel le barreau (1) comporte deux portions d'extrémité (7, 8) pour le centrage et le maintien du barreau (1) dans une enveloppe (3) délimitant la cavité (6).

4. Générateur selon l'une des revendications 1 à 3, dans lequel le gaz laser contient du gaz carbonique.

5. Générateur selon l'une des revendications 1 à 4, dans lequel les dits moyens de pompage excitent le gaz laser à fréquence radio.

6. Générateur selon l'une des revendications 1 à 5, dans lequel le capillaire (2) a une section droite circulaire.

**Patentansprüche**

1. Gas Hohlleiterlasergenerator mit einer Kapillare, umfassend einen monolithischen Stab (1) aus dielektrischem Material, in dem eine durchquerende Kapillare (2) ausgebildet ist, einen diese Kapillare (2) beinhaltenden und mit dem Laser-Gas gefüllten Resonanzhohlraum (6), und eine elektrische Hochfrequenz-Pumpeneinrichtung zur Verursachung einer Laser-Entladung in Gas der Kapillare, dadurch gekennzeichnet, dass der Stab (1) ein verengtes Mittelstück (12), welches an der Kapillare (2) hin steicht, sowie Elektroden (16, 17) umfasst, die sich im Wesentlichen über die ganze Länge des verengten Mittelstücks (12) des Stables (1) und zu beiden Seiten der Kapillaire (2) erstrecken.

2. Generator gemäss Anspruch 1, bei welchem eine (6) der Elektroden fadenförmig ist und die andere (17) bandförmig ist.

3. Generator gemäss eines der Ansprüche 1 und 2, bei welchem der Stab (1) zwei Endteile (7, 8) zur Zentrierung und Befestigung des Stabes (1) in einem den Hohlraum (6) begrenzenden Gehäuse (3) umfasst.

4. Generator gemäss eines der Ansprüche 1 bis 3, bei welchem des Laser-Gas Kohlendioxid beinhaltet.

5. Generator gemäss eines der Ansprüche 1 bis 4, bei welchem die genannte elektrische Hochfrequenz-Pump-einrichtung das Laser-Gas bei Rundfunkfrequenzen erregt.

6. Generator gemäss eines der Ansprüche 1 bis 5, bei welchem der Abschmitt der Kapillare (2) kreisförmig ist.

**Claims**

1. Gas wave-guide laser generator with a capillary, comprising a monolithic bar (1) made of dielectric material, in which is formed a through capillary (2), a resonant cavity (6) comprising the capillary (2), filled with the laser gas, and highfrequency electrical pumping means for provoking a laser discharge in the gas of the capillary, characterized in that the bar (1) comprises a thinned intermediate portion (12) flush with the capillary (2), and electrodes (16, 17) extending over the thinned portion (12) of the bar (1) virtually over the whole of its length and on either side of the capillary (2).

2. The generator of Claim 1, wherein one (16) of the electrodes is filiform and the other (17) in strip form.

3. The generator of one of Claims 1, and 2, wherein the bar (1) comprises two end portions (7, 8) for centring and maintaining the bar (1) in an envelope (3) defining the cavity (6).

4. The generator of one of Claims 1 to 3, wherein the laser gas contains carbon dioxide gas.

5. The generator of one of Claims 1 to 4, wherein said pumping means excite the laser gas at radio frequency.

6. The generator of one of Claims 1 to 5, wherein the capillary (2) is of circular cross section.

FIG.1

FIG.2

FIG.3

FIG.4